# EUROPEAN PATENT APPLICATION

(11) **EP 2 343 671 A2**
(43) Date of publication of application: **13.07.2011**
(21) Application number: 10197258.6
(22) Date of filing: 29.12.2010
(51) Int. Cl.: G06K 9/46, G01N 21/27, G06T 7/00

(54) **Equipment and method for analyzing image data**

(30) Priority: 08.01.2010 JP 2010002906
(71) Applicant: Sumitomo Electric Industries, Ltd., Osaka-shi, Osaka 541-0041 (JP)
(72) Inventor: Ono, Yuuki, Osaka-shi, Osaka (JP); Saitou, Tatsuhiko, Yokohama-shi, Kanagawa (JP)
(74) Representative: HOFFMANN EITLE

(57) **Abstract**

An analyzing unit has a linear SVM discriminating section and a nonlinear SVM discriminating section and analyzes an image data having an intensity data for numerous wavelengths in each pixel. In the linear SVM discriminating section, the discrimination as to whether the intensity data is an object data or not is performed for every pixel by using an intensity data of the image data as a feature quantity and using the linear SVM, and subsequently in the nonlinear SVM discriminating section, discrimination using the nonlinear SVM is performed only with respect to the pixels discriminated by the linear SVM as their intensity data being object data. Discrimination can be accomplished with higher precision as compared with the case where all pixels are discriminated only with the linear SVM. Also, as compared with the case where the discrimination is conducted only with the nonlinear SVM for all pixels, the discrimination can be accomplished at higher speed.

## Description

### BACKGROUND OF THE INVENTION

### Field of the Invention

The present invention relates to equipment and method for analyzing hyperspectral image data.

### Description of the Background Art

Conventionally, for detecting a foreign substance adhering to food on a food processing line or for observing an affected region with respect to biological tissues, it is common practice to make judgment regarding existence of any foreign substance or conditions of an affected portion by analyzing image data after imaging inspection objects such as food or an affected region. A known technique for analyzing such image data is a method using Support Vector Machines (SVM). The SVM technique used to discriminate one from another of two classes is an algorithm such that image data analyzing equipment forms a discrimination boundary to discriminate between an object A and an object B by learning sample image data as a learning data (teacher data), regarding two objects (the object A and the object B) to be discriminated among inspection objects, and subsequently using the boundary, the data analyzing equipment conducts discrimination of information contained in the image data of the inspection objects.

As for the image data used for the detection of a foreign substance and observation of an affected region, hyperspectral images are adopted increasingly in more cases than ever. The hyperspectral image is an image which is obtained by imaging an inspection object with a hyperspectral sensor including a spectrometer and the feature of which is that the intensity data in five or more wavelength bands are held for every pixel. In the case of a hyperspectral image, as compared with a common RGB image or gray scale image, more information is held in each pixel, allowing analyzing the compositions of an inspection object by using intensity data in a wavelength band that is different from the visible light region, for example, and accordingly the hyperspectral image is used for more detailed analysis of an inspection object.

Thus, in recent years, generally methods using support vector machines for analyzing hyperspectral images of inspection objects are examined. For example, PCT Application Japanese Translation Publication No. 2007-505733 (Patent document 1) describes a method in which for the purpose of classifying target objects lying in a flow of wastes, the flow of wastes are imaged with a hyperspectral sensor and the image data thus obtained are analyzed using the support vector machines.

However, in due case where a hyperspectral image is analyzed using support vector machines, it takes long time to correctly judge complicated discriminating boundaries because many intensity data are held in each pixel of the hyperspectral image. Therefore, it has been difficult to apply such technology in an environment where a high-speed high-precision analysis is needed, such as a food processing line.

### SUMMARY OF THE INVENTION

An object of the present invention is to provide equipment, as well as a method, for analyzing hyperspectral image data with high precision and at high speed.

To achieve such object, provided is image data analyzing equipment for analyzing an image data including intensity data for at least five wavelength bands in each pixel thereof and thereby discriminating each pixel as to whether or not an object data indicating a detection object is included in the image data. The image data analyzing equipment comprises: (1) means for acquiring image data; (2) linear SVM discrimination means for discriminating pixels contained in the image data, by using linear support vector machines, as to whether an intensity data of each pixel is an object data or not, wherein the intensity data is used as a feature quantity; and (3) nonlinear SVM discrimination means for discriminating, by using the nonlinear SVM and using the intensity data as a feature quantity, as to whether the intensity data of each pixel is an object data or not, with respect to the pixels discriminated by the linear SVM discrimination means regarding the intensity data as object data.

Also, an image data analyzing method is provided as another embodiment of the present invention. The method is such that by analyzing image data including intensity data for at least five wavelength bands in each pixel, each pixel is discriminated as to whether an object data indicating a detection object is included in the image data or not, and the method comprises: (1) an image data acquisition step for acquiring image data; (2) a linear SVM discrimination step for discriminating every pixel by using linear support vector machines as to whether an intensity data of the pixel is an object data or not, wherein the intensity data contained in each pixel of the image data is used as a feature quantity; and (3) a nonlinear SVM discrimination step such that, of the pixels included in the image data, each pixel having an intensity data discriminated as an object data at the linear SVM discrimination step is again discriminated, as to whether the intensity data of the pixel is an object data or not, by using the nonlinear support vector machines and using the intensity data as a feature quantity.

With the image data analyzing equipment or the image data analyzing method of the present invention, discrimination can be accomplished not only with higher precision but also at higher speed, as compared with the case where all pixels are discriminated only with the linear SVM. Accordingly, the present invention enables high-precision and high-speed image data analysis.

### BRIEF DESCRIPTION OF THE DRAWINGS

Figure 1 is a conceptional schematic diagram of a discrimination system which includes an embodiment of image data analyzing equipment relating to the present invention.

Figure 2 is a conceptional schematic diagram for explaining a hyperspectral image.

Figure 3 is a block diagram showing the compositions of image data analyzing equipment relating to an embodiment of the present invention.

Figure 4 is a flow chart of a method of learning done prior to discrimination using SVM in the image data analyzing equipment relating to an embodiment of the present invention.

Figure 5 is a flow chart showing how an image data is analyzed in an embodiment of image data analyzing equipment relating to the present invention.

Figure 6A is a photograph showing a result of intermediate discrimination of Example 1 in which the linear SVM was adopted, and Fig. 6B is a photograph showing a result of final discrimination of Example 1 in which the nonlinear SVM was adopted.

Figure 7 is a photograph showing a discrimination result of Comparative example 1.

### DETAILED DESCRIPTION OF THE INVENTION

Hereinafter, preferred embodiments of the present invention will be described in reference to the accompanying drawings. The drawings are provided for the purpose of explaining the embodiments and are not intended to limit the scope of the invention. In the drawings, an identical mark represents the same element so that the repetition of explanation may be omitted. The dimensional ratios in the drawings are not always exact.

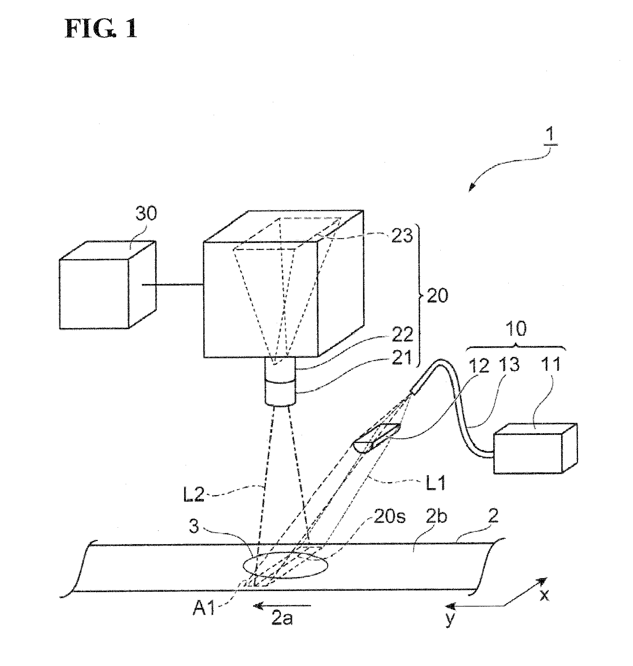

Figure 1 is a conceptional schematic diagram of a discrimination system which includes an embodiment of image data analyzing equipment relating to the present invention. A discrimination system 1 is equipment for inspecting whether any abnormality such as degeneration of inspection objects 3 (In Fig. 1, a position where the inspection objects are placed is shown) exists or any foreign substance mixes with the inspection objects 3, which are dispersedly placed on a belt conveyor 2. Examples of inspection objects 3 are raw materials or products of foods or pharmaceuticals. Examples of foreign substances which adhere to inspection objects 3 include things such as hair which come from a living body, metals originating from manufacturing equipment, and contaminants. The degeneration of inspection objects 3 can be detected by measuring the amount of moisture, sugar, and the like which are contained in the inspection objects 3.

The discrimination system 1 measures the spectrum of diffuse reflection light obtained by irradiating measurement light to inspection objects 3, and based on the spectrum, it detects abnormalities such as degeneration of the inspection objects 3, foreign substances adhering to the inspection object 3, and the like. The discrimination system 1. is equipped with a lamp unit 10, a detection unit 20, and an analyzing unit 30 (image data analyzing equipment).

The lamp unit 10 irradiates measurement light having a given wavelength band to an illuminated region A 1 on a belt conveyor 2. The wavelength range of the measurement light irradiated by the lamp unit 10 is chosen as needed according to an inspection object 3 itself or an abnormality that is a detectable target such as degeneration of an inspection object 3 or a foreign substance adhering to an inspection object 3. In the case where near-infrared light is used as the measurement light, specifically, light having a wavelength range of 800 nm to 2500 nm can suitably be used, but visible light instead of near-infrared light can also be used as the measurement light. As for the present embodiment, an explanation will be given with respect to a lamp unit 10 including a light source 11 (SC light source) for generating supercontinuum (SC) light.

An illuminated region A1 is a region that is a part of the surface (loading surface 2b) of the belt conveyor 2 on which inspection objects 3 are placed. The illuminated region A1 spreads in the width direction (x-axis direction) which is perpendicular to a forward direction (y-axis direction) of the loading surface 2b and extends linearly from one end to the other end of the loading surface 2b. The width of the illuminated region A1 in the direction (y-axis direction) perpendicular to the extending direction is 10 mm or less.

The lamp unit 10 has a light source 11, an illuminating section 12, and an optical fiber 13 for connection from the light source 11 to the illuminating section 12. The light source 11 generates SC light as near-infrared light. More specifically, the light source 11 that is a SC light source has a seed light source and a nonlinear medium such that light emitted from the seed light source is input into the nonlinear medium so that the spectrum thereof is expanded to a broad bandwidth by nonlinear optical effect in the nonlinear medium so as to output SC light. The near-infrared light (SC light) thus generated is incident on one of the end faces of the optical fiber 13. The near-infrared light travels through the core of the optical fiber 13 and is emitted from the other end face to the illuminating section 12. The illuminating section 12 irradiates the near-infrared light (SC light) emitted from the end face of the optical fiber 13 to the illuminated region A1 where inspection objects 3 are to be placed. A cylindrical lens is suitably used as the illuminating section 12 for emitting near-infrared light in a one-dimensional linear form corresponding to the illuminated region A1. The near-in.frared light L 1 that has been shaped into a linear form in the illuminating section 12 is irradiated therefrom to the illuminated region A1.

The near-infrared light L1 output from the lamp unit 10 is reflected in a diffused manner at the inspection objects 3 placed on the illuminated region A1. Then, a part of the reflected light is incident on the detection unit 20 as diffuse reflection light L2.

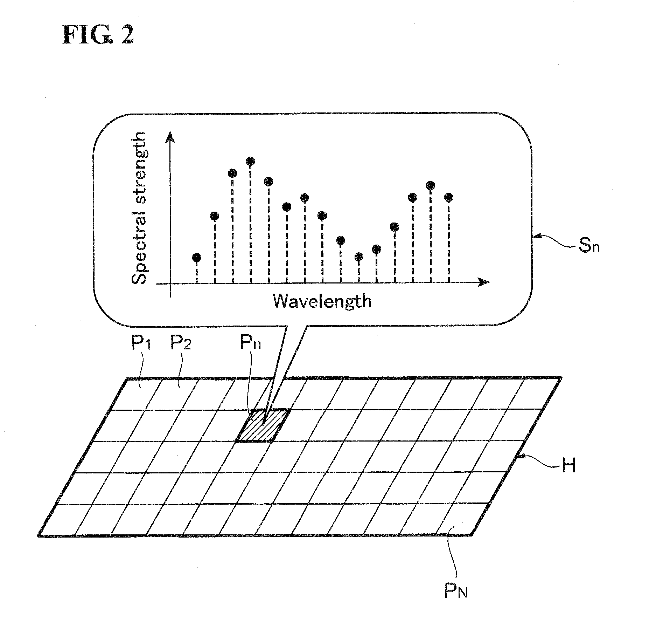

The detection unit 20 has a function as a hyperspectral sensor for acquiring a hyperspectral image. Figure 2 is a conceptional schematic diagram for explaining a hyperspectral image. The hyperspectral image is an image consisting of N-number of pixels P1 to PN, and one pixel Pn of them includes a spectral information Sn consisting of a plurality of intensity data. Each intensity data is a data showing the spectral strength at a specific wavelength (or a wavelength band), and Fig. 2 shows that 15 intensity data are held as the spectral information Sn in the pixel Pn. Thus, the hyperspectral image has a plurality of intensity data at each of the pixels constituting an image, and hence is a data consisting of three-dimensional composition: two-dimensional image element plus spectral data element. In the present embodiment, a hyperspectral image is an image that consists of pixels each having intensity data for at least five wavelength bands.

Referring back to Fig. 1, the detection unit 20 has a slit 21, a spectrometer 22, and an OE converting section 23. The detection unit 20 has a view region 20s extending in the direction (x-axis direction) that is perpendicular to the forward direction 2a of the belt conveyor 2. The view region 20s of the detection unit 20 is a linear region which is included in the illuminated region A1 of the loading surface 2b and the diffuse reflection light L2 reflected from the view region 20s passes through the slit 21 and forms an image on the OE converted section.

The slit 21 has an opening having a longer side in the direction parallel to the extending direction (x-axis direction) of the illuminated region A1.. The diffuse reflection light L2 having been incident into the slit 21 of the detection unit 20 is incident on the spectrometer 22.

The spectrometer 22 splits the diffuse reflection light L2 in the direction (y-axis direction) perpendicular to the longitudinal direction of the slit 21,i.e. the extending direction of the illuminated region A1. The light thus split by the spectrometer 22 is received by the OE converting section 23.

The OE converting section 23 has a light-receiving face on which a plurality of photodetectors are two-dimensionally arranged, and the photodetectors respectively receive light. Thus, the OE converting section 23 receives light with the respective wavelengths of diffuse reflection light L2 reflected at the respective position along the width direction (x-axis direction) on the belt conveyor 2. According to the intensity of the light thus received, each photodetector outputs a signal as information of a point on a two-dimensional plane regarding position and wavelength. The signals output from the photodetectors of the OE converting section 23 are sent, from the detection unit 20 to the analyzing unit 30, as image data relating to a hyperspectral image.

Upon receiving the image data sent from the detection unit 20 with respect to the hyperspectral image including an inspection object 3, the analyzing unit 30 (image data analyzing equipment) analyzes the image data by using support vector machines (SVM). The hyperspectral image is an image data including the intensity data of at least five wavelength bands at every pixel, and wavelength bands are chosen so that a substance as a detection object can be identified for discrimination. For detecting a foreign substance, for example, wavelength bands are chosen such that a specific absorption peak deriving from the foreign substance is included therein. Also, when measuring the quantity of sugar contained in inspection objects 3, wavelength bands should be chosen to cover wavelengths of 1500 nm or 2100 nm, including vicinity of at least 100 nm thereof, since an absorption peak for sugar exists around those wavelengths. (From the position and strength of a peak originated from sugar, it is possible to find the kind and the contained quantity of the sugar, and hence to detect any abnormality of inspection objects 3 or evaluate the quality thereof.)

As for SVM, there are two kinds: linear SVM in which the discrimination boundary is expressed with a linear function of feature quantity and nonlinear SVM in which the discrimination boundary is expressed with a nonlinear function of feature quantity. Discrimination using the linear SVM is easy to apply to a real-time processing since the calculation quantity is small, although the precision is inferior, as compared with the nonlinear SVM. On the other hand, discrimination using the nonlinear SVM is superior in precision as compared with the linear SVM, but the calculation quantity thereof tends to increase as the precision of discrimination is improved by parameter adjustment. As described in more detail later, the analyzing unit 30 of the present embodiment enables high-precision and high-speed discrimination by using both the linear SVM and the nonlinear SVM.

The analyzing unit 30 is a computer which includes hardware such as CPU (Central Processing Unit), RAM (Random Access Memory) which is a main storage, and ROM (Read Only Memory), a communication module for communication with other equipment such as a detection unit, and a hard disk for auxiliary storage. The operation of these components enables a function as the analyzing unit 30.

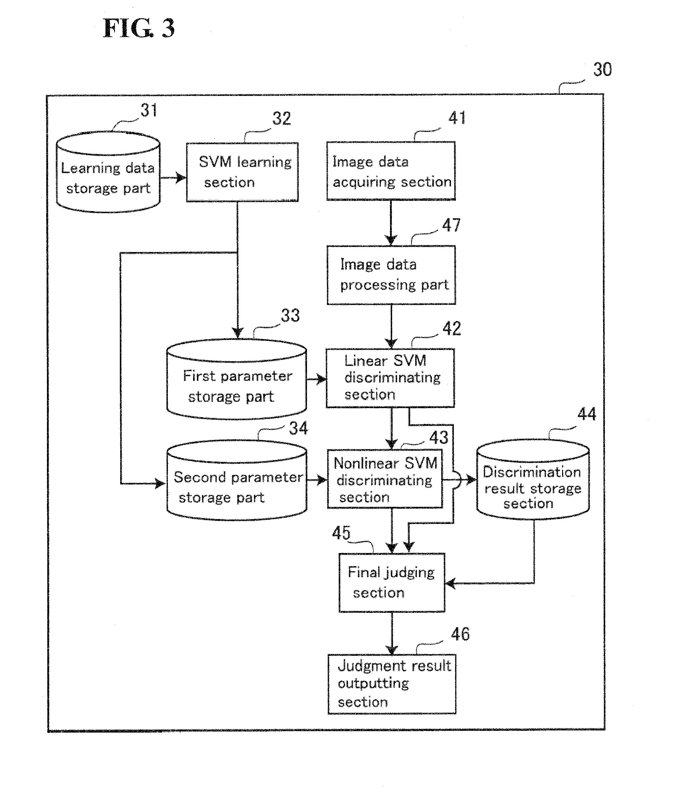

Figure 3 is a block diagram showing the compositions of the analyzing unit 30. The analyzing unit 30 includes a learning data storage part 31 for storing a learning image data, an SVM learning section 32, a first parameter storage part 33 for storing a linear SVM discrimination parameter, a second parameter storage part 34 for storing a nonlinear SVM discrimination parameter, an image data acquiring section 41, an image data processing part 47 (image data processing means), a linear SVM discriminating section 42 (linear SVM discrimination means), a nonlinear SVM discriminating section 43 (nonlinear SVM discrimination means), a discrimination result storage section 44 (storage means), a final judging section 45 (judging means), and a judgment result outputting section 46.

Of these components, the learning data storage part 31, the SVM learning section 32, the first parameter storage part 33, and the second parameter storage part 34 function to form and store parameters for discriminating a detection object contained in inspection objects 3. The image data acquiring section 41, the image data processing part 47, the linear SVM discriminating section 42, the nonlinear SVM discriminating section 43, the discrimination result storage section 44, the final judging section 45, and the judgment result outputting section 46 altogether function to analyze image data obtained from the inspection objects 3.

In the learning data storage part 31, image data of an inspection object 3 and a detection object are stored as image data about which the SVM of the analyzing unit 30 can learn. For example, in a case where a hair adhering to beans, which are inspection objects 3, is to be detected as a foreign substance, the analyzing unit 30 stores image data of beans and image data of hair (detection object). When the image data to be analyzed by the analyzing unit 30 is a hyperspectral image as in the present embodiment, a similar hyperspectral image is used as a data for learning.

By using image data of substances (two objects to be discriminated) which are detection objects, the SVM learning section 32 recognizes, as object data, intensity data contained in pixels of an image captured from one of the detection objects, and calculates a discrimination boundary (linear SVM discrimination parameter and nonlinear SVM discrimination parameter) for judging whether or not the intensity data correspond to the object data. (In the present embodiment, such two objects to be discriminated are beans and hair, and an intensity data contained in a pixel of an image obtained from hair is an "object data".) For example, this processing is performed such that an operator of the analyzing unit 30 specifies the image data of two objects to be discriminated, and orders the SVM learning section 32 to calculate a discrimination boundary by using as a feature quantity the intensity data which constitute spectral information for respective images of the two objects.

The linear SVM discrimination parameter prepared by the SVM learning section 32 is stored in a first parameter storing section 33. And the nonlinear SVM discrimination parameter is stored in a second parameter storing section 34.

The linear SVM discrimination parameter and the nonlinear SVM discrimination parameter, which are formed by the SVM learning section 32, can be formed such that their discrimination, precision is changed based on the instruction of the operator. This discrimination precision can appropriately be changed according to the number of times of analysis conducted using SVM and the kind of information to be acquired as a result of the analysis. As described above, the linear SVM is inferior in discrimination precision, but advantageous as compared to the nonlinear SVM because the linear SVM requires small calculation quantity for discrimination processing. Therefore, in the present embodiment, it is intended that a prior filtering is performed using the linear SVM so that the discrimination using the nonlinear SVM may not be performed with respect to pixels for which the possibility of a detection object (hair) is made extremely small by such filtering. Therefore, for the purpose of parameter used for the linear SVM discrimination, a parameter of rougher precision is formed so that a pixel in which a detection object is captured will not fall outside the target of discrimination using the nonlinear SVM.

The image data acquiring section 41 has a function of acquiring image data from the detection unit 20. The image data acquired by the image data acquiring section 41 is an image data relating to a hyperspectral image captured from the above-mentioned inspection objects 3. If necessary, the image data acquired by the image data acquiring section 41 is sent to the linear SVM discriminating section 42 via the image data processing part 47.

The image data processing part 47, which is not indispensable in the image data analyzing equipment of the present invention, processes the image data acquired in the image data acquiring section 41. Such data processing is, for example, a processing to normalize an intensity data which the image data holds in each pixel or a numerical processing to find differences between neighboring data. Thus, by applying a pre-determined data processing to image data, the analyzing unit 30 is enabled to perform analysis more efficiently.

The linear SVM discriminating section 42 has a function of discriminating every pixel, depending on whether or not an intensity data therein is an object data (data indicating a detection object) as determined by using the linear SVM and using the intensity data (which is included in the image data) as feature quantity. In the linear SVM discriminating section 42, the discrimination as to whether the intensity data is an object data or not is performed for every pixel by using the linear SVM discrimination parameter stored in the first parameter storage part 33. As a result, with respect to a pixel in which an intensity data is judged to be an object data by the linear SVM discriminating section 42, the information for identifying the pixel and the intensity data of the pixel are sent to the nonlinear SVM discriminating section 43. As for a pixel for which the intensity data is judged not to be an object data by the linear SVM discriminating section 42, the information for identifying the pixel and the discrimination result are sent to the final judging section 45.

The nonlinear SVM discriminating section 43 has a function of discriminating each pixel as to whether the intensity data thereof is an object data or not by using the nonlinear SVM and using the intensity data sent from the linear SVM discriminating section 42. In the nonlinear SVM discriminating section 43, only with respect to "the pixels which are discriminated as their intensity data are object data" by the linear SVM discriminating section 42, the discrimination as to whether an intensity data is an object data or not is performed using the nonlinear SVM discrimination parameter stored in the second parameter storage part 34. Then, with respect to a pixel in which an intensity data is judged to be an object data by the nonlinear SVM discriminating section 43, the results of the discrimination made by the nonlinear SVM discriminating section 43 and the corresponding information for specifying the respective pixels are altogether sent to the discrimination result storage section 44. Also, as for a pixel for which the intensity data is judged not to be an object data by the nonlinear SVM discriminating section 43, the results of the discrimination made by the nonlinear SVM discriminating section 43 and the information for specifying the pixels are sent to the final judging section 45.

The discrimination result storage section 44 has a function of storing the results of discrimination done by the nonlinear SVM discriminating section 43 and the corresponding information for specifying the respective pixels. The information stored in the discrimination result storage section 44 is used at the time of judgment by the final judging section 45.

The function of the final judging section 45 is as follows: by referring to discrimination results and information for specifying the related pixels, which are sent from the linear SVM discriminating section 42 and the nonlinear SVM discriminating section 43, and by referring to discrimination results stored in the discrimination result storage section 44, of a plurality of pixels in an image data, if the number of specific pixels for which the nonlinear SVM discriminating section 43 determines the intensity data to be an object data is equal to or more than a predetermined number, then the final judging section 45 concludes that a detection object exists in a region constituted of the plurality of pixels including the specific pixels.

Here, in the case where the size of a detection object like hair is greater than a pixel constituting an image data, it is assumed that the intensity data is discriminated as being an object data in a plurality of neighboring pixels by the nonlinear SVM discriminating section 43. On the other hand, there is a possibility that an intensity data due to a noise which has accidentally occurred at the time of capturing an image data might be discriminated as being an object data. In such case, however, it is assumed that the possibility of a similar result being obtained in the neighboring pixels would be low.

In the final judging section 45, therefore, in a region having 25 pixels (5 pixels x 5 pixels), for example, if three or more pixels which are discriminated as pixels whose intensity data are object data and which capture an image of a detection object exist as a group, then the region is judged to be a region where the detection object has been captured. This will reduce such possibility as an intensity data due to a noise occurring accidentally in the image data might be discriminated as an object data, and accordingly, the analysis of an image data can be accomplished with higher precision. The above-mentioned method of judgment by the final judging section 45 is an exceedingly simplified example, and a more complicated judgment algorithm capable of high discrimination may be incorporated. The results of the judgment made by the final judging section 45 are sent to the judgment result outputting section 46.

The judgment result outputting section 46 functions to notify the operator of a discrimination system I by outputting a result of judgment made by the final judging section 45. The manner of such output is, for example, an output to a monitor connected to the analyzing unit 30, or an output to a printer. For outputting judgment results, there are various possible manners; for example, such output may be done as a two-dimensional image using the image data obtained by the detection unit 20.

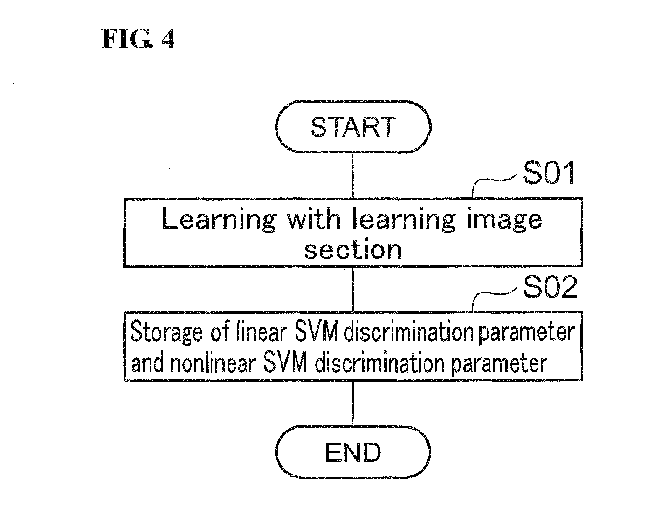

Hereinafter, an explanation will be given about a method for analyzing image data of hyperspectral image by the analyzing unit 30 that constitutes the discrimination system 1. Figure 4 is a flow chart of a method of learning done in the image data analyzing unit 30 prior to discrimination using SVM. First, by using a learning image data stored in the learning data storage part 31, learning is done in the SVM learning section 32, and a linear SVM discrimination parameter and a nonlinear SVM discrimination parameter are formed (SO1). Next, the linear SVM discrimination parameter and the nonlinear SVM discrimination parameter are stored in the first parameter storage part 33 and the second parameter storage part 34, respectively (S02). Thus, the pre-processing for analyzing image data is completed. The above-mentioned learning may be performed at any time prior to image data analysis. That is, numerous kinds of parameters may be formed at a time beforehand, or learning may be done immediately before the image data analysis.

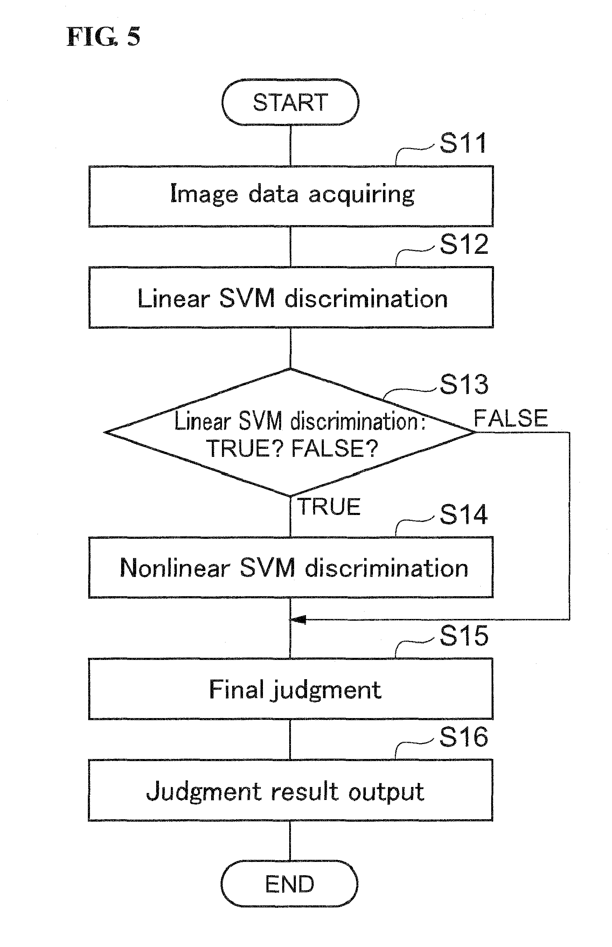

Figure 5 is a flow chart showing how an image data is analyzed in the image data analyzing unit 30. Image data of imaging the inspection objects 3 are acquired by the image data acquiring section 41 of the analyzing unit 30 (S11, Image data acquiring step). Subsequently, using this image data (it may be used after applying a processing thereto), the linear SVM discriminating section 42 performs discrimination by means of the linear SVM for every pixel (S12, Linear SVM discrimination step). The discrimination by means of the linear SVM is performed for all pixels contained in the image data, and depending on the results of such discrimination, judgment as to whether an intensity data is an object data (TRUE) or not (FALSE) is done for every pixel (S13, Linear SVM discrimination results judgment step). At this stage, the discrimination results of pixels in which the intensity data are judged not to be object data (FALSE) are sent to the final judging section 45. And, as for the discrimination results of pixels in which the intensity data are judged to be object data (TRUE), the intensity data are sent to the nonlinear SVM discriminating section 43.

As for the intensity data sent to the nonlinear SVM discriminating section 43, discrimination using the nonlinear SVM is performed for every pixel by the nonlinear SVM discriminating section 43 (S14, Nonlinear SVM discrimination step). At this stage also, judgment as to whether the intensity data is an object data (TRUE) or not (FALSE) is done for every pixel as in the case of the discrimination by the linear SVM discriminating section 42. Then, the results of such judgment are stored in the discrimination result storage section 44, and also sent to the final judging section 45 so that the last judgment is performed by the final judging section 45 (S15, Final judgment step).

More specifically, in the last judgment by the final judging section 45, of a plurality of pixels which includes specific pixels, if the number of pixels which the nonlinear SVM discriminating section 43 discriminates as the intensity data are object data is equal to or more than a given number, then it is concluded that a detection object exists in the region which is constituted of the plurality of pixels including the specific pixels. Then, the results of such judgment made by the final judging section 45 are sent to the judgment result outputting section 46, so that the results are output (S16, Output step). The above-described steps complete a series of processing relating to the image data analysis by the analyzing unit 30.

As described above, with the analyzing unit 30 (image data analyzing equipment) and the image data analyzing method relating to the present embodiment, discrimination using the linear SVM that enables high-speed processing that requires small calculation quantity is done beforehand, and then discrimination using the nonlinear SVM capable of high-precision discrimination that requires large calculation quantity is done with respect to the pixels which have been discriminated as the intensity data are object data as a result of the previous discrimination using the linear SVM. Therefore, as compared with the case where discrimination is conducted only with the linear SVM for all pixels, the discrimination can be performed with higher precision, and also as compared with the case where the discrimination is conducted only with the nonlinear SVM for all pixels, the discrimination can be accomplished at higher speed. Thus, the present invention enables high-precision and high speed analysis of image data.

Furthermore, the analyzing unit 30 is equipped with the final judging section 45 having the fol lowing function: of a plurality of pixels including specific pixels in an image data, if the number of pixels discriminated by the nonlinear SVM discriminating section 43 judging the intensity data to be object data is equal to or more than a given number in the specific pixels, then the final judging section 45 concludes that a detection object exists in the region constituted of the plurality of pixels. Therefore, the possibility of false discrimination will be decreased: for example, in an image data an intensity data derived from a noise having accidentally occurred would rarely be judged to be an object data, and accordingly analysis of image data can be achieved with higher precision.

The present invention is not limited to the embodiments described above, and the embodiments of the invention can be modified in various ways. For example, the image data analyzing equipment relating to the present invention can be incorporated into a system for analyzing abnormality of other industrial products or observing an affected region of bio-tissue. Also, the analyzing unit 30 is not always required to be connected with the detection unit 20 for capturing image data as in the above embodiments, and can be used by itself alone.

Moreover, the embodiments of the invention may be modified such that the discrimination is performed using a plurality of mutually different parameters for the linear SVM discriminating section 42 and the nonlinear SVM discriminating section 43, respectively. In such case, the embodiments may be modified such that judgment as to whether an intensity data is an object data or not (either TRUE or FALSE) is done by combining discrimination results obtained using a plurality of parameters. More specifically, for example, it is possible to structure such that in the linear SVM discriminating section 42, discrimination is performed by means of the linear SVM using three kinds of mutually different parameters, and in the nonlinear SVM discriminating section 43, discrimination is performed by means of the linear SVM using two kinds of mutually different parameters. In such case, one of possible methods is such that if all judgments in the discriminations by three kinds of linear SVM are "TRUE" in the linear SVM discriminating section 42, the results of the discrimination made in the linear SVM discriminating section 42 are regarded as object data, whereas in the nonlinear SVM discriminating section 43, if the judgment in either one of the two kinds of nonlinear SVM is "TRUE", the results of the discrimination by the nonlinear SVM discriminating section 43 are regarded as object data.

In the above embodiments, the final judging section 45 is described with respect to embodiments in which the last judgment is conducted considering the results of discrimination for a plurality of neighboring pixels; however, an embodiment may be adopted such that judgment in the final judging section 45 is conducted solely on the basis of the results of the discrimination made for every pixel by the nonlinear SVM discriminating section 43.

### Example 1

We examined the discrimination precision and the processing time when image data are analyzed using the analyzing unit 30. First, assuming that a detection object is "human hair mixing into bean products on a processing line", learning was done using an image data of bean products, that is, inspection objects, and an image data of hair, that is, a detection object. Next, discrimination using the linear SVM was performed for the image data of hyperspectral image of bean products to which a hair is adhering. Lastly, discrimination was done using the nonlinear SVM with respect to the pixels which were discriminated as being object data by means of the linear SVM.

In the final judging section 45 of the analyzing unit 30, on the basis of discrimination results obtained using the nonlinear SVM. judgment was done as to whether an intensity data was an object data or not, and no judgment was made on the basis of the discrimination results for a plurality of neighboring pixels. As for the linear SVM discrimination parameter that was used when performing discrimination by the linear SVM, a low standard to recognize an object data was set so that the intensity data of a pixel which imaged a hair might be recognized correctly as an object data in the image data. Also, the nonlinear SVM discrimination parameter was set to have a value that would enable correct discrimination of the pixel which imaged a hair.

### Comparative example 1

The analysis of the image data used in Example I was performed by using only the linear SVM. The analysis target was all pixels constituting the image data, and a linear SVM discrimination parameter adopted for the linear SVM of comparative example 1 is different from the linear SVM discrimination parameter adopted for the linear SVM of the Example 1 and a high standard to recognize an object data was set to decrease a false detection.

### Comparative example 2

The analysis of the image data used in Example 1 was performed by using only the nonlinear SVM. The analysis target was all pixels constituting the image data, and the analysis was done using a nonlinear SVM discrimination parameter enabling correct discrimination of a pixel that imaged a hair.

### Evaluation 1

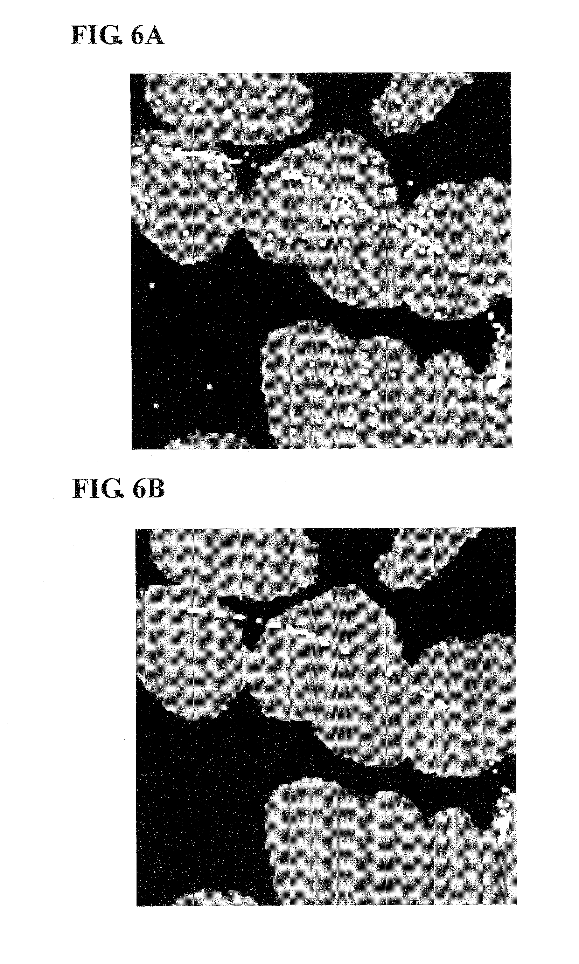

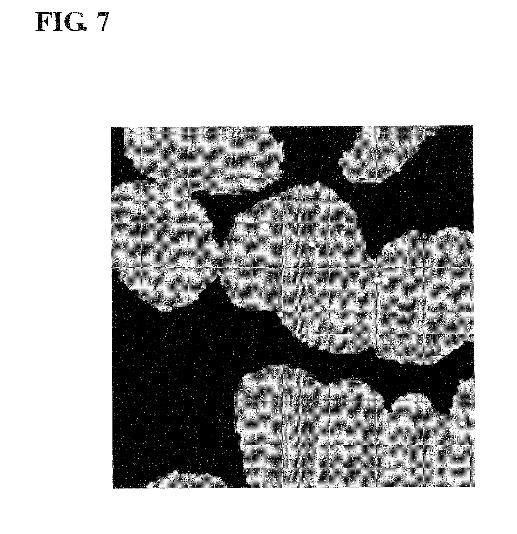

Figure 6A is a photograph showing an intermediate result of discrimination done using the linear SVM in Example 1, and Fig. 6B is a photograph showing the last result of the discrimination made using the nonlinear SVM in Example 1. Figure 7 is a photograph showing the result of the analysis done in Comparative example 1. In all of these photographs, pixels which were discriminated by recognizing the intensity data as object data (that is, hair) are shown in white, and pixels which were discriminated by recognizing the intensity data to be not object data is shown in black or gray.

The result of false discrimination by the linear SVM increased (Fig. 6A) in the case where the linear SVM discrimination parameter was chosen so that the intensity data of every pixel that imaged a hair might be recognized as an object data (the intermediate result of Example 1). Also, in the case where the linear SVM discrimination parameter was chosen so that the value thereof might reduce false detection (Comparative example 1), the pixel which imaged a hair could not be discriminated correctly (Fig. 7). Thus, it has been proved that high-precision analysis is difficult to achieve in the case where the analysis of image data is done by using only the linear SVM. On the other hand, by performing discrimination using the nonlinear SVM continuously after the discrimination using the linear SVM (Example 1), false detection was remarkably reduced, and high-precision discrimination was achieved (Fig. 6 B).

### Evaluation 2

The precision of detection and the processing time by the analysis in Example 1 and Comparative examples I and 2 were evaluated. Table I shows the percentage of detecting the detection objects (hair), the percentage of false detection, and the processing time (from the beginning to the end of analysis) by the analysis in Example 1 and Comparative examples 1 and 2.

**Table 1**

| | Example 1 | Comparative example 1 | Comparative example 2 |
|---|---|---|---|
| Detection percentage(%) | 96.8 | 58.4 | 96.8 |
| False-detection percentage (%) | 0.02 | 0.11 | 0.03 |
| Processing time (second) | 0.9 | 0.5 | 85.7 |

In Table I, "Detection percentage" is a ratio of the number of hairs actually detected to the number of hairs which mixed into bean products on the processing line. The detection percentage indicates that the higher the percentage, the more hairs can be detected. The term "false-detection percentage" means a ratio of pixels which were judged to be "TRUE", that is, a ratio of the number of pixels which were judged to include detection objects, i.e., hair) in the case where discrimination was done with respect to a hyperspectral image of 1,000,000 pixels obtained by photographing a processing line on which no hair existed. The false-detection ratio indicates that the smaller the ratio, the smaller the decrease in yield of the processing line. The "processing time" is an average time that was spent for discrimination of the whole hyperspectral image.

The results of Table I show that the analysis done by using only the linear SVM (Comparative example 1) failed to obtain sufficient precision, although it exhibited high-speed. In contrast, the analysis made by using only the nonlinear SVM (Comparative example 2) exhibited very high precision, but it took processing time more than 170 times as compared with the analysis made by using only the linear SVM. In comparison with those discrimination methods, in the case of analysis made by combining the linear SVM and the nonlinear SVM in Example 1, it was proved that the processing time was less than twice the analysis by using only the linear SVM (Comparative example 1), whereas precision level was equivalent to that of the analysis done by using only the nonlinear SVM (Comparative example 2). Thus, it was confirmed that an analysis can be made with high precision and at high speed by combining the linear SVM and the nonlinear SVM as in the case of Example 1.

## Claims

1. Image data analyzing equipment for analyzing an image data including intensity data for at least five wavelength bands in each pixel thereof and thereby discriminating each pixel as to whether or not an object data indicating a detection object is included in the image data, the image data analyzing equipment comprising:
means for acquiring image data;
linear SVM discrimination means for discriminating each pixel contained in the image data as to whether an intensity data of each pixel is an object data or not, by using linear support vector machines and by using the intensity data as a feature quantity; and
nonlinear SVM discrimination means for discriminating, by using nonlinear SVM and using the intensity data as a feature quantity, as to whether the intensity data of each pixel is an object data or not, with respect to the pixels discriminated by the linear SVM discrimination means judging the intensity data to be object data.

2. Image data analyzing equipment according to claim 1, further comprising an image data processing means of processing the image data.

3. Image data analyzing equipment according to claim 1 or 2, further comprising a storage means and a judging means,
wherein the results of discrimination made by the nonlinear SVM discrimination means are stored, respectively as a discrimination result for each pixel, by the storage means,and
wherein by referring to the discrimination results stored in the storage means, and of a plurality of pixels in the image data, if the number of specific pixels for which the intensity data are judged to be object data by the nonlinear SVM discrimination means is equal to or more than a predetermined number, the judging means concludes that a detection object exists in a region constituted of the plurality of pixels including the specific pixels.

4. An image data analyzing method for analyzing image data including intensity data for at least five wavelength bands in each pixel and thereby discriminating each pixel as to whether an object data indicating a detection object is included in the image data or not, the method comprising:
an image data acquiring step for acquiring the image data:
a linear SVM discrimination step for discriminating every pixel by using linear support vector machines as to whether an intensity data of the pixel is an object data or not, wherein the intensity data contained in each pixel of the image data is used as a feature quantity; and
a nonlinear SVM discrimination step such that, of the pixels included in the image data, each pixel having an intensity data that is discriminated as an object data at the linear SVM discrimination step is again discriminated, as to whether the intensity data of the pixel is an object data or not, by using the nonlinear support vector machines and using the intensity data as a feature quantity.

5. An image data analyzing method according to claim 4, further comprising an image data processing step for processing the image data prior to the linear SVM discrimination step.

6. An image data analyzing method according to claim 4 or 5, further comprising a judgment step, wherein of a plurality of pixels in the image data, if the number of specific pixels for which the intensity data are judged to be object data by the nonlinear SVM discrimination means is equal to or more than a predetermined number, it is concluded that a detection object exists in a region constituted of the plurality of pixels including the specific pixels.
